# EUROPÄISCHE PATENTANMELDUNG

(11) **EP 1 150 477 A2**
(43) Veröffentlichungstag der Anmeldung: **31.10.2001**
(21) Anmeldenummer: 01107767.4
(22) Anmeldetag: 04.04.2001
(51) Int. Cl.: H04M 1/725, H04Q 7/32

(54) **Verfahren zum Telefonieren und Mobiltelefon dazu**

(30) Priorität: 29.04.2000 DE 10021126
(71) Anmelder: Mannesmann VDO AG, 60388 Frankfurt am Main (DE)
(72) Erfinder: Winterkorn, Horst, 35435 Wettenberg-Wissmar (DE)
(74) Vertreter: Keller, Thomas, Dipl.-Ing. (FH)

(57) **Zusammenfassung**

Eine örtliche Telefonanlage hat ein Basisgerät (1), welches über zumindest eine Antenne (9 - 12) Funksignale empfangen oder senden kann. Mobiltelefone (13, 14, 15) können sowohl über ein Mobilfunknetz arbeiten als auch unmittelbar mit dem Basisgerät (1) kommunizieren. Hierzu loggt man sich mit dem Mobiltelefon (13, 14, 15) in die örtliche Telefonanlage ein und kann dann ohne Benutzung des Mobilfunknetzes mit geringer Funkleistung zu der Telefonanlage gehörende Telefone (8, 13, 14, 15) erreichen.

## Beschreibung

Die Erfindung betrifft ein Verfahren zum Telefonieren mittels einer örtlichen, in einem Gebäude oder einem Fahrzeug installierten Telefonanlage sowie ein Mobiltelefon zur Durchführung dieses Verfahrens.

In Gebäuden und Fahrzeugen stehen zum Telefonieren meist ortsfest installierte Telefonanlagen zur Verfügung. Diese sind beispielsweise in Firmen so konzipiert, dass man innerhalb der Firma von einem Telefon zum anderen oder mit den einzelnen Telefonen nach draußen zu beliebigen Teilnehmern telefonieren kann. In Fahrzeugen sind die Telefonanlagen so ausgelegt, dass sie über eine außen am Fahrzeug angebrachte Außenantenne mit einer ausreichend hohen Sendeleistung abstrahlen, dass ein Telefonieren auch über relativ weit entfernte Empfangsantennen möglich wird.

Unabhängig von ortsfest installierten Telefonanlagen haben Mobiltelefone eine sehr starke Verbreitung gefunden, weil sie an nahezu jedem Ort ein Telefonieren ermöglichen. Eine Verwendung von Mobiltelefonen als Haustelefone ist derzeit jedoch nicht sinnvoll, weil man dann auch für die einzelnen Gespräche innerhalb des Hauses die Gebühren des Netzbetreibers des Mobiltelefons zahlen müsste.

Der Erfindung liegt das Problem zugrunde, ein Verfahren der eingangs genannten Art zu entwickeln, mit dem mit möglichst geringen Kosten möglichst vielseitig telefoniert werden kann. Weiterhin soll ein Mobiltelefon zur Durchführung dieses Verfahrens geschaffen werden.

Das erstgenannte Problem wird erfindungsgemäß dadurch gelöst, dass die örtliche Telefonanlage nach Art eines schnurlosen Telefons mit einem Empfänger und Sender für Funksignale ausgestattet wird und dass in Reichweite der örtlichen Telefonanlage auf ein Mobiltelefon zum Einloggen in die örtliche Telefonanlage umgeschaltet wird.

Bei einer solchen Verfahrensweise kann man sich mit einem Mobiltelefon in eine örtliche Telefonanlage, beispielsweise eine Haustelefonanlage, einloggen. Man kann dann mittels des Mobiltelefons innerhalb des Gebäudes zu im Haus installierten Telefonen Telefongespräche führen, ohne dass Gebühren bei dem Betreiber des Mobiltelefonnetzes anfallen. Weiterhin kann man wiederum ohne Gebühren des Mobiltelefon-Netzbetreibers nach dem Einloggen in die örtliche Telefonanlage von dem Mobiltelefon Telefongespräche über das Festnetz führen, an welches die örtliche Telefonanlage angeschlossen ist. Auf diese Weise kann ein Mobiltelefon wahlweise als Mobiltelefon oder als schnurloses Telefon einer örtlichen Telefonanlage benutzt werden.

Besonders vorteilhaft ist es, wenn nach dem Einloggen in die örtliche Telefonanlage dem Mobiltelefon von der örtlichen Telefonanlage eine weitere Rufnummer zugeteilt wird. Hierdurch wird es möglich, auf Großtelefonanlagen mit einzelnen Telefonen für jeden Teilnehmer zu verzichten, indem jeder, der über eine solche Anlage erreichbar sein will, sich mit seinem Mobiltelefon in eine einfache Telefonanlage einloggt. Dadurch entfallen die Kosten für Einzeltelefone. Lediglich an der Basisstation oder in einem Empfang könnte man Ersatz-Mobiltelefone mit minimaler Leistung für den Fall bereithalten, dass ein Teilnehmer sein Mobiltelefon vergessen oder nicht geladen hat. Die zum Einloggen notwendige Codierung auf eine bestimmte Person kann am Computer oder über eine Schnittstelle schnell und direkt mit dem Mobiltelefon oder über Infrarot oder Funk erfolgen. Die Codierung kann entweder von einer dafür geschulten Person oder sogar automatisch durchgeführt werden.

Das erfindungsgemäße Verfahren kann auch allgemein zur Weiterleitung von Informationen und für Zusatzdienste benutzt werden. Man könnte sich beispielsweise morgens mittels seines Mobiltelefons bei einem Zeitstempler melden und abends abmelden. Ein anderer Dienst könnte die Zutrittsberechtigung sein, welche mittels des Mobiltelefons über Infrarotlicht oder Funk gesteuert werden könnte.

Eine Erweiterung der nach dem erfindungsgemäßen Verfahren arbeitenden Anlagen für Internetdienste oder andere Dienste wäre ein Leichtes, da hierbei nur Endgeräte betroffen wären, die ohnehin von Zeit zu Zeit ausgetauscht oder aufgerüstet werden.

Besonders vorteilhaft ist es, wenn gemäß einer Weiterbildung des erfindungsgemäßen Verfahrens die Sendeleistung des Mobiltelefons entsprechend der erforderlichen Reichweite gesteuert wird. Hierdurch hat man die Möglichkeit, bei Verwendung des Mobiltelefons als schnurloses Telefon einer örtlichen Telefonanlage die Sendeleistung auf die geringe Leistung schnurloser Telefone, also etwa 300 mW, herunterzuregeln, so dass keine Gefahr einer Schädigung des Benutzers des Mobiltelefons oder der Umgebung aufgrund einer hohen Sendeleistung innerhalb eines geschlossenen Raumes besteht. Weiterhin wird durch das Herunterregeln der bei Benutzung des Mobiltelefons als schnurloses Telefon sinnlosen hohen Sendeleistung die Batterie des Mobiltelefons geschont, so dass sie länger geladen bleibt.

Das Mobiltelefon steht auch nach dem Einloggen in eine örtliche Telefonanlage noch für Gespräche über das Mobilfunknetz zur Verfügung, so dass der Benutzer des Mobiltelefons auch bei Verwendung seines Mobiltelefons als schnurloses Telefon unverändert über das Mobilfunknetz erreichbar ist, wenn das Mobiltelefon gleichzeitig bei der örtlichen Telefonanlage und einem Mobilfunknetz eingeloggt bleibt.

Das Mobiltelefon arbeitet ohne manuelles Eingreifen des Benutzers stets optimal, wenn es gemäß einer anderen Weiterbildung des erfindungsgemäßen Verfahrens bei Eintritt in den Empfangsbereich der örtlichen Telefonanlage automatisch bei der örtlichen Telefonanlage eingeloggt wird.

Die Mittel zum automatischen Einloggen können sehr einfach gestaltet sein, wenn das automatische Einloggen bei der örtlichen Telefonanlage mittels eines Infrarotsignals oder Ultraschallsignals erfolgt.

Auch eine Internetverbindung kann über das Mobiltelefon ohne Kabelverbindungen in beliebigen Räumen eines Gebäudes erstellt werden, wenn die örtliche Telefonanlage mit einem mit ihrem Sender und Empfänger kommunizierenden Internetanschluss oder einem solchen Modem versehen wird und mit dem Mobiltelefon über Funk über die örtliche Telefonanlage eine Internetverbindung hergestellt wird.

Das zweitgenannte Problem, nämlich die Entwicklung eines Mobiltelefons zur Durchführung des Verfahrens, wird erfindungsgemäß gelöst durch Mittel zum Einloggen in eine mit einem Empfänger und Sender für Funksignale ausgestatteten örtliche Telefonanlage. Durch diese Gestaltung kann man das Mobiltelefon in Gebäuden als schnurloses Telefon benutzen. Verwendet man das Mobiltelefon im Auto, dann kann es durch Einloggen in eine Telefonanlage des Autos mit schwacher Sendeleistung mit der Telefonanlage des Autos kommunizieren und die Telefonanlage des Autos die empfangenen Signale mit für Autotelefonanlagen üblicher hoher Leistung über die Außenantenne des Autos absenden.

Eine mögliche Beeinträchtigung der Umwelt durch unnötig starke Strahlung lässt sich durch Mittel zum Steuern der Sendeleistung des Mobiltelefons entsprechend der erforderlichen Reichweite verhindern.

Das Mobiltelefon ist bei Verwendung als schnurloses Telefon dennoch für Gespräche im Mobilfunknetz empfangsbereit, wenn das Mobiltelefon Mittel zum gleichzeitigen Einloggen bei der örtlichen Telefonanlage und einem Mobilfunknetz hat.

Ein jeweils optimales Telefonieren erfordert keine Maßnahmen des Benutzers, wenn die Mittel zum Einloggen in die örtliche Telefonanlage zum automatischen Einloggen bei Eintritt in den Empfangsbereich der örtlichen Telefonanlage ausgebildet sind. Statt automatische Einloggmittel vorzusehen, könnte man natürlich auch von Hand durch Tastenbetätigung das Einloggen vornehmen oder hierzu das Mobiltelefon kurzfristig mit einem Steckkontakt verbinden.

Das Mobiltelefon ist besonders einfach gestaltet, wenn zum automatischen Einloggen bei der örtlichen Telefonanlage ein Infrarot- oder Ultraschallsender vorgesehen ist.

Zur weiteren Verdeutlichung der Erfindung wird nachfolgend auf die Zeichnung Bezug genommen. Diese zeigt in
- Fig.1: eine schematische Darstellung einer nach dem erfindungsgemäßen Verfahren arbeitenden Telefonanlage,
- Fig.2: einen Teilbereich eines Fahrzeugs mit einer Telefonanlage nach der Erfindung.

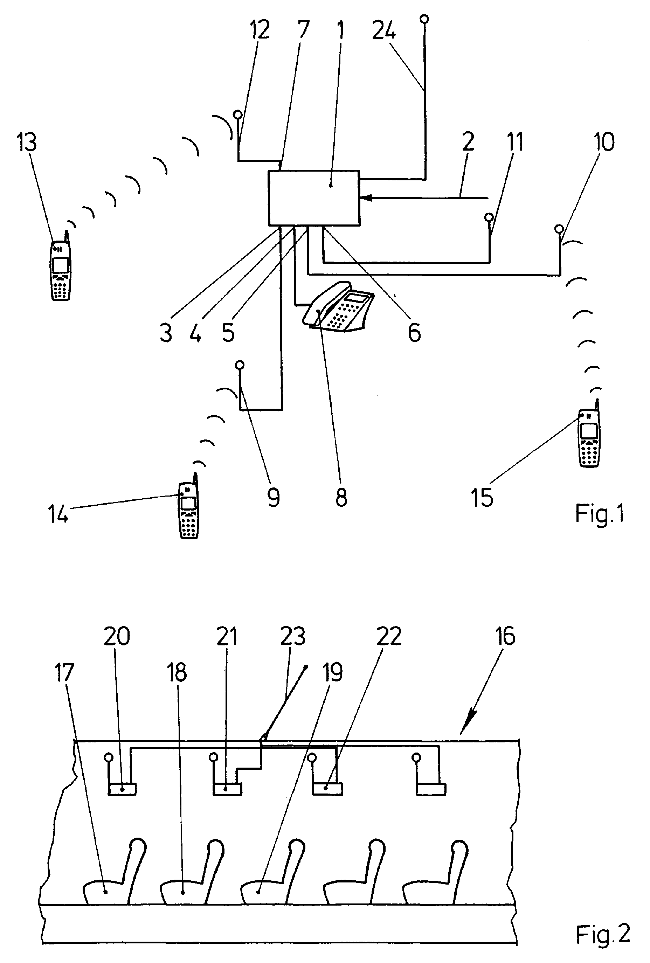

Die Figur 1 zeigt von einer Telefonanlage ein Basisgerät 1, welches an eine Festnetzleitung 2 und/oder eine Außenantenne 24 angeschlossen ist. Das Basisgerät 1 hat Auslässe 3, 4, 5, 6, 7, die jeweils beispielsweise mit ortsfesten Telefonen 8 oder mit einer Antenne 9, 10, 11, 12 zum Senden und Empfangen von Funksignalen verbunden sind. Diese Antennen 9, 10, 11, 12 sind beispielsweise in verschiedenen Etagen eines Gebäudes oder in verschiedenen Gebäuden eines Unternehmens angeordnet.

Die Figur 1 zeigt weiterhin drei Mobiltelefone 13, 14, 15. Mit diesen kann man über die jeweilige Antenne 9 - 12 zum Basisgerät 1 und von dort beispielsweise zum Telefon 8 oder zu einem anderen Mobiltelefon 13, 14, 15 eine Verbindung herstellen. Wichtig für die Erfindung ist, dass die Mobiltelefone 13, 14, 15 Mittel aufweisen, mit denen sie sich in das Basisgerät der Telefonanlage einloggen, sobald sie in den Bereich dieser Telefonanlage gelangen. Das Einloggen kann automatisch, beispielsweise mittels Infrarotlicht erfolgen.

Ist ein bestimmtes Mobiltelefon 13, 14, 15 beim Basisgerät eingeloggt und ihm dadurch eine bestimmte Telefonnummer zugeordnet und freigegeben worden, dann stellt das Basisgerät 1 über die Antennen 9 - 12 eine Verbindung zu dem jeweiligen Mobiltelefon 13, 14, 15 her, wenn ein Gespräch über die Festnetzleitung 2 oder die Außenantenne 24 eingeht. Entsprechend können beim Sprechen die von einem Mobiltelefon 13 - 15 ausgesendeten Funksignale von einer beliebigen der Antennen 9 - 12 empfangen und vom Basisgerät 1 weitergeleitet werden.

Da die Mobiltelefone 13, 14, 15 primär dazu konzipiert sind, Funksignale eines Mobilfunknetzes zu empfangen und für das Mobilfunknetz Funksignale zu erzeugen, haben sie für den Gebrauch als schnurloses Telefon eine unnötig hohe Leistung. Eine Kommunikation zwischen dem Basisgerät 1 und den einzelnen Mobiltelefonen 13, 14, 15 kann jedoch durch eine einfache Elektronik in den Mobiltelefonen 13, 14, 15 erkannt werden, um in einem solchen Fall automatisch die Sendeleistung der Mobiltelefone 13, 14, 15 herunter zu regeln.

Die Figur 2 zeigt in einem Fahrzeug 16 hintereinander mehrere Sitzreihen 17, 18, 19. Oberhalb dieser Sitzreihen 17, 18, 19 befinden sich Sender/Empfangseinheiten 20, 21, 22, welche alle mit einer Außenantenne 23 verbunden sind. Wenn auf den Sitzreihen 17, 18, 19 Personen sitzen und ein Mobiltelefon benutzen, dann kommunizieren die jeweiligen Mobiltelefone zunächst nur mit der nächstgelegenen Sender/Empfangseinheit 20, 21 oder 22. Die jeweiligen Mobiltelefone benötigen deshalb nur eine geringe Leistung, so dass sie andere Einrichtungen in dem Fahrzeug nicht stören. Die empfangenen Signale der Sender/Empfangseinheiten 20, 21, 22 werden verstärkt und dann mit ausreichend hoher Leistung über die Außenantenne 23 abgestrahlt.

## Patentansprüche

1. Verfahren zum Telefonieren mittels einer örtlichen, in einem Gebäude oder einem Fahrzeug installierten Telefonanlage, **dadurch gekennzeichnet, dass** die örtliche Telefonanlage nach Art eines schnurlosen Telefons mit einem Empfänger und Sender für Funksignale ausgestattet wird und dass in Reichweite der örtlichen Telefonanlage ein Mobiltelefon zum Einloggen in.die örtliche Telefonanlage umgeschaltet wird.

2. Verfahren nach Anspruch 1, **dadurch gekennzeichnet, dass** nach dem Einloggen in die örtliche Telefonanlage dem Mobiltelefon von der örtlichen Telefonanlage eine weitere Rufnummer zugeteilt wird.

3. Verfahren nach den Ansprüchen 1 oder 2, **dadurch gekennzeichnet, dass** die Sendeleistung des Mobiltelefons entsprechend der erforderlichen Reichweite gesteuert wird.

4. Verfahren nach zumindest einem der vorangehenden Ansprüche, **dadurch gekennzeichnet, dass** das Mobiltelefon gleichzeitig bei der örtlichen Telefonanlage und einem Mobilfunknetz eingeloggt bleibt.

5. Verfahren nach zumindest einem der vorangehenden Ansprüche, **dadurch gekennzeichnet, dass** das Mobiltelefon bei Eintritt in den Empfangsbereich der örtlichen Telefonanlage automatisch bei der örtlichen Telefonanlage eingeloggt wird.

6. Verfahren nach Anspruch 5, **dadurch gekennzeichnet, dass** das automatische Einloggen bei der örtlichen Telefonanlage mittels eines Infrarotsignals oder Ultraschallsignals erfolgt.

7. Verfahren nach zumindest einem der vorangehenden Ansprüche, **dadurch gekennzeichnet, dass** die örtliche Telefonanlage mit einem mit ihrem Sender und Empfänger kommunizierenden Internetanschluss oder einem solchen Modem versehen wird und mit dem Mobiltelefon über Funk über die örtliche Telefonanlage eine Internetverbindung hergestellt wird.

8. Mobiltelefon, **gekennzeichnet durch** Mittel zum Einloggen in eine mit einem Empfänger und Sender für Funksignale ausgestatteten örtliche Telefonanlage.

9. Mobiltelefon nach Anspruch 8, **gekennzeichnet durch** Mittel zum Steuern der Sendeleistung des Mobiltelefons (13, 14, 15) entsprechend der erforderlichen Reichweite.

10. Mobiltelefon nach zumindest einem der vorangehenden Ansprüche, **dadurch gekennzeichnet, dass** das Mobiltelefon (13, 14, 15) Mittel zum gleichzeitigen Einloggen bei der örtlichen Telefonanlage und einem Mobilfunknetz hat.

11. Mobiltelefon nach Anspruch 10, **dadurch gekennzeichnet, dass** die Mittel zum Einloggen in die örtliche Telefonanlage zum automatischen Einloggen bei Eintritt in den Empfangsbereich der örtlichen Telefonanlage ausgebildet sind.

12. Mobiltelefon nach Anspruch 11, **dadurch gekennzeichnet, dass** zum automatischen Einloggen bei der örtlichen Telefonanlage ein Infrarot- oder Ultraschallsender vorgesehen ist.
